# EUROPEAN PATENT APPLICATION

(11) **EP 4 748 523 A1**
(43) Date of publication of application: **27.05.2026**
(21) Application number: 24215054.8
(22) Date of filing: 25.11.2024
(51) Int. Cl.: B23C 5/10

(54) **MILLING TOOL**

(71) Applicant: Seco Tools AB, 737 82 Fagersta (SE)
(72) Inventor: ALSTERS, Rob, 737 82 Fagersta (SE)
(74) Representative: Sandvik

(57) **Abstract**

The present invention relates to a milling tool for metal cutting comprising a body with a cutting head (1). The cutting head comprises a plurality of radially protruding and axially extending teeth, wherein each tooth of the plurality teeth comprises a rake surface, a clearance surface, and a cutting edge. The cutting edge, at an intersection of the rake surface with the clearance surface, extends axially rearward from a radially outer region at the front end. The cutting edge is continuous, and wave-shaped, and comprises alternating radially outer crest cutting edges and radially inner trough cutting edges. The clearance surface comprises a primary clearance surface, and a plurality of stabilizing clearance surfaces. Each of the plurality of stabilizing clearances surfaces is located rotationally directly behind a respective one of the crest cutting edge and has a radial stabilizing clearance angle β of 0,5° - 2°. The primary clearance surface is located rotationally directly behind each of the trough cutting edges and has a radial primary clearance angle α which is larger than the radial stabilizing clearance angle β.

## Description

### Technical field

The present invention relates to a milling tool for metal cutting.

### Background

A wide range of components are machined from many different types of material, such as metal, composites or combinations thereof. Accordingly, a variety of different cutting tools, and in particular milling tools have been developed. Conventionally, a milling tool comprises a plurality of cutting teeth, which extend axially along the tool. The teeth have cutting edges formed at an intersection of a rake surface and a clearance surface, which cutting edges follow the axial extension of the teeth. During operation, the milling tool is rotated in a direction of rotation around a central longitudinal axis and fed in a radial direction. The cutting edges cut a surface in the radial feed direction. One type of milling tools is roughing tools that have wave-shaped cutting edges.

A problem with such known milling tools is, that in some operations, the milling tools are exposed to conditions causing vibrations and chatter, which in turn affect and tool life and sometimes cause tool breakage.

### Summary

It is an object of the present invention to at least partly obviate the above mentioned problems. This object is achieved according to the invention by means of a milling tool according to claim 1.

The present invention relates to a milling tool for metal cutting comprising a body with a cutting head, which cutting head
- has a front end and a central longitudinal axis extending rearward from the front end, and
- is rotatable around the longitudinal axis in a direction of rotation, wherein
   the cutting head comprises a plurality of radially protruding and axially extending teeth, wherein each tooth of the plurality teeth comprises
- a rake surface,
- a clearance surface, and
- a cutting edge, which,
   - at an intersection of the rake surface with the clearance surface, extends axially rearward from a radially outer region at the front end, and
   - which is continuous, and wave-shaped, wherein the cutting edge comprises alternating radially outer crest cutting edges and radially inner trough cutting edges,
wherein
the clearance surface comprises a primary clearance surface, and
a plurality of stabilizing clearance surfaces, wherein
- each of the plurality of stabilizing clearances surfaces is located rotationally directly behind a respective one of the crest cutting edge, and has a radial stabilizing clearance angle β of 0,5° - 2°, and
- the primary clearance surface is located rotationally directly behind each of the trough cutting edges and has a radial primary clearance angle α which is larger than the radial stabilizing clearance angle β.

Thus, the clearance surface comprises a plurality of stabilizing clearance surfaces, which each are located rotationally directly behind one respective associated crest cutting edge having a small, stabilizing clearance angle of β of 0,5° - 2°. A primary clearance surface is located rotationally directly behind each of the trough cutting edges, wherein the clearance angle α of the primary clearance surface is larger stabilizing clearance angle of β. It has surprisingly been found that providing only the crest cutting edges with stabilizing surface portions is enough to achieve a reduction in vibrations and chatter, and hence increase tool life. Another advantage is that the milling tool performs well within broader ranges of cutting data, for example rotation speed, feed rate, etc.

The present invention relates to a milling tool for metal cutting, such as chip removing metal cutting. The present invention is especially suitable for machining aluminum workpieces. The milling tool comprises a body with a cutting head. Optionally, the milling tool is of a type wherein the cutting head is a one-piece integral unit with a shaft, sometimes referred to as a "solid round tool". Alternatively, the milling tool is an exchangeable head and is connectable to a shaft. Optionally, the shaft has a coupling at a rear end. Through the shaft, the cutting head of the solid round tool or of the exchangeable head, respectively, is connectable to a machine spindle, or to an adapter for a machine spindle. The machine spindle typically is part of a machine, for example a CNC machine. Preferably, the milling tool comprises a wear resistant material such as for example coated or non-coated cemented carbide, cermet, ceramic, CBN or steel.

The cutting head has a front end and a central longitudinal axis extending rearward from the front end, wherein the cutting head is rotatable, for example by the machine spindle, around the longitudinal axis in a direction of rotation. Preferably, the front end of the cutting head is an axially forwardly facing end of the milling tool. Preferably, the cutting head is cylindrical.

The cutting head comprises a plurality of teeth, for example, at least two, preferably at least three teeth. For example, the cutting head comprises at most six, preferably at most four teeth. The teeth extend axially rearward from a radially outer region of the front end. Each tooth protrudes radially, preferably from a peripheral surface of the body of the cutting head and presents a cutting edge, which is mainly radially cutting.

According to embodiments, the milling tool has teeth provided in the front end of the cutting head. Each such tooth in the front end extends radially outward from a central region at the longitudinal axis and each present a mainly axially forward cutting front cutting edge. Optionally, all teeth extend both axially along the periphery and radially along the front end, wherein they meet at a forward radially outer region. Alternatively, some or all teeth extend only along the front end in a radial direction, or only along the periphery in an axial direction. Milling tools with cutting edges at the front may be fed also in an axial direction, for example during plunging operations.

The cutting head defines a cutting circle with a cutting diameter. The cutting circle is to be understood as the circle formed by the radially most outer point of any of the cutting edges when the milling tool is rotated one turn around the longitudinal axis without feeding the tool in any direction. The direction of rotation is the direction that the milling tool is rotated during normal cutting operation. Preferred cutting diameters are 6 - 25mm, and more preferably 12 - 25mm.

According to an embodiment, the cutting head is elongated in the longitudinal direction. Preferably, the axial length of the cutting head is larger than the cutting diameter, for example 1- 4 times the cutting diameter, preferably 2 times the cutting diameter.

Each cutting edge is formed at an intersection of a respective rake surface and a respective clearance surface. Preferably, the cutting head comprises a plurality of chip flutes, which, rotationally in front of a respective one of the plurality of teeth, each extends axially rearward from the front end. The chip flutes are typically recessed in the peripheral surface of the body of the cutting head. Preferably, the rake surface is formed by a portion of the chip flute adjacent the cutting edge. A radial rake angle is optionally positive or negative, for example positive and at most 17°, preferably 15 - 20°. These rake angles are suitable for a milling tool for roughing of aluminum workpieces.

Optionally, each chip flute extends in parallel with the longitudinal axis, or with an angle to the longitudinal axis, such as for example forming a helix. Optionally, the angle of the chip flutes varies or is constant, for example, the angle decreases or increases axially rearward from the front end. The angle is for example 0°, i.e. the chip flute is parallel with longitudinal axis, or least 10° and at most 60°, preferably, at least 20° and at most 50°. Within this range, the chip flutes provide satisfactory chip evacuation and/or chip breaking for most applications.

Each cutting edge is continuous, and wave-shaped, wherein the cutting edge comprises alternating radially outer crest cutting edges and radially inner trough cutting edges. Preferably, a trough cutting edge comprises a bottom point, and a crest cutting edge, which is axially directly adjacent to the trough cutting edge, comprises a top point, wherein a distance from the trough bottom point to the central longitudinal axis is shorter than a distance from the crest top point to the longitudinal axis, forming waves having a wave height in radial direction and a wavelength in an axial direction.

The continuous cutting edge is preferably designed to cut uninterrupted over the entire axial length thereof, including the trough cutting edges with the deepest bottom point. The continuous cutting edge thus lacks chip breaking interruptions. Corresponding points on the wave-shaped cutting edge preferably follow a curve having the same angle to the longitudinal axis as the chip flute, which is rotationally in front thereof.

In an axial direction, a distance from a point on a trough cutting edge to a corresponding point on a consecutive trough cutting edge is a wavelength. In a radial direction, a distance from a bottom point of a trough cutting edge to a top point of a consecutive crest cutting edge is a wave height. The wavelength may be measured in parallel with the longitudinal axis, and the wave height along a radius. For example, when the milling tool is rotated around the longitudinal axis, the cutting edge of each tooth forms a line of intersection in a central plane containing the central longitudinal axis. The wavelength and wave height of the wave-shaped cutting edge can be seen and measured in the wave-shape of the line of intersection thereof.

Optionally, the wave-shape of each cutting edge is of any suitable kind, for example, trapezoidal or zigzag-shaped, and preferably sinusoidal. Preferably, trough cutting edges and/or crest cutting edges are curved. Preferably, all teeth have the same wave-shape, wherein the wavelength and/or the wave height is constant along each cutting edge. Preferably, the wave is phase-shifted between the cutting edges, for example by a distance equal to the wavelength divided by the number of cutting edges.

According to an embodiment, an average of all wavelengths is 10 - 15% of the cutting diameter. A shorter wavelength can result in higher cutting forces which may increase the load on the milling tool and the machine. A longer wavelength can result in less aggressive cutting which may slow down the material removal rate and reduce overall productivity.

According to an embodiment, an average of all wave heights is 2 - 5% of the cutting diameter, preferably 3%. A shorter wave height is disadvantageous for chip breaking. A larger wave height risks to weaken the tool, especially in roughing operations with large feed per tooth.

In each position along the cutting edge, the clearance surface has a radial clearance angle. The radial clearance angle of a point of the cutting edge may be measured in an axial cross section at the point, i.e. in a cross section with longitudinal axis as normal. In this view, the radial clearance angle is the angle between a tangent to a circle cut by the point when the milling tool is rotated without feed, and the clearance surface.

As seen in a cross section, the clearance surface has breadth. The breadth can be measured as a distance from a rotationally leading end to a trailing end.

The clearance surface of each tooth comprises a primary clearance surface and a plurality of stabilizing clearance surfaces. Each of the plurality of stabilizing clearances surfaces is located rotationally directly behind a respective one of the crest cutting edge and has a radial stabilizing clearance angle β of 0,5° - 2°. The primary clearance surface is located rotationally directly behind each of the trough cutting edges and has a radial primary clearance angle α which is larger than the radial stabilizing clearance angle β. A smaller radial stabilizing clearance angle β could negatively affect the cutting ability of the milling tool and/or cause problems with friction and adherence of material from the workpiece material. A larger radial stabilizing clearance angle β could risk that the stabilizing clearance surface provides insufficient support. Preferably, the radial stabilizing clearance angle β is 0,75° - 1,25°.

According to an embodiment, as seen in a cross section, each of the stabilizing clearance surfaces has a breadth, the breadth of each of the plurality of stabilizing clearance surfaces is at most 150 µm. A larger breadth could cause problems with adherence of workpiece material.

According to an embodiment, as seen in a cross section, each of the stabilizing clearance surfaces has a breadth, the breadth of each of the plurality of stabilizing clearance surfaces is at least 50 µm. A smaller breadth could risk that the stabilizing clearance surface provides insufficient support.

As stated above, in an axial direction, a distance from a point on a trough cutting edge to a corresponding point on a consecutive trough cutting edge is a wavelength. According to an embodiment, a length in the axial direction of the stabilizing clearance surface of the crest cutting edge, that is located between two consecutive trough cutting edges, is at least 10% of the wavelength. A shorter length could risk that the stabilizing clearance surface provides insufficient support.

According to an embodiment, the length of the stabilizing clearance surface is at most 60%, preferably at most 50%, of the wavelength. Thereby it is ensured sufficient support is provided by the plurality of stabilizing clearance surfaces while also reducing grinding operations during production of the milling tool, especially in narrow troughs.

Preferably, the length of each of the stabilizing clearance surfaces is distributed symmetrically over the crest cutting edge that they are located rotationally behind.

According to preferred embodiments, each of the stabilizing clearance surfaces have both a length and a breadth within the preferred ranges.

In embodiments having convexly curved cutting crest edges, each of the plurality of stabilizing clearances surfaces follows the curvature of the respective one of the crest cutting edges. Thereby sharp corners at front and rear edges of the plurality of stabilizing clearances surfaces is avoided, which increases tool life. In other embodiments, the stabilizing lands are grinded as planar surfaces creating a linear crest cutting edge. This is a cost efficient grinding method.

According to an embodiment, the radial primary clearance angle α is 8° - 12°. A smaller primary clearance angle α may cause workpiece material to adhere to the milling tool. A larger primary clearance angle α may be weaken the tooth.

Optionally, the clearance surface comprises a secondary clearance surface rotationally directly behind the primary clearance surface.

Preferably, each of the plurality of stabilizing clearances surfaces is machined in the primary clearance surface. For example, when the milling tool is produced, the primary clearance surface is ground forming a wave-shaped surface on a peripheral surface adjacent a chip flute. Thereby trough cutting edges are formed at the intersection of the primary clearance surface with a rake surface portion in the chip flute. Then, each of the plurality of stabilizing clearance surfaces are ground into the primary clearance surface on top of each radially outer wave crest part of the primary clearance surface. Each of the stabilizing clearance surfaces is ground adjacent to the chip flute such that crest cutting edges are formed at the intersection with a rake surface portion in the chip flute. This is a cost-efficient way to realize the desired, different clearance angles along the extension of the cutting edge.

Preferably, the primary clearance surface extends rotationally further rearward than each of the plurality of stabilizing clearance surfaces. Thereby, also the crest cutting edges are advantageously provided with increased clearance behind stabilizing surface portions formed by the plurality of stabilizing clearances surfaces.

### Brief description of the drawings

In the following, example embodiments will be described in greater detail and with reference to the accompanying drawings, in which:
Fig. 1 is a side view of a first embodiment of the milling tool for metal cutting according to the invention;
Fig. 2 is a perspective view of the first embodiment of the subject milling tool;
Fig. 3 is a front end view of the first embodiment of the subject milling tool;
Fig. 4 is an enlarged perspective view of one tooth of the subject milling tool;
Figs. 5 indicates the location of axial cross sections as shown in Figs. 6 and 7.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

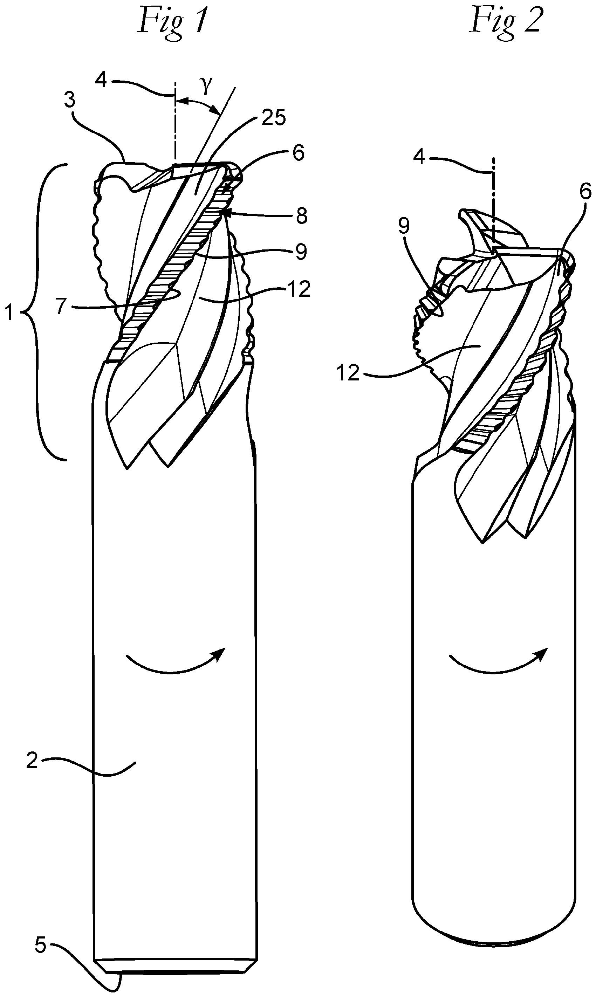

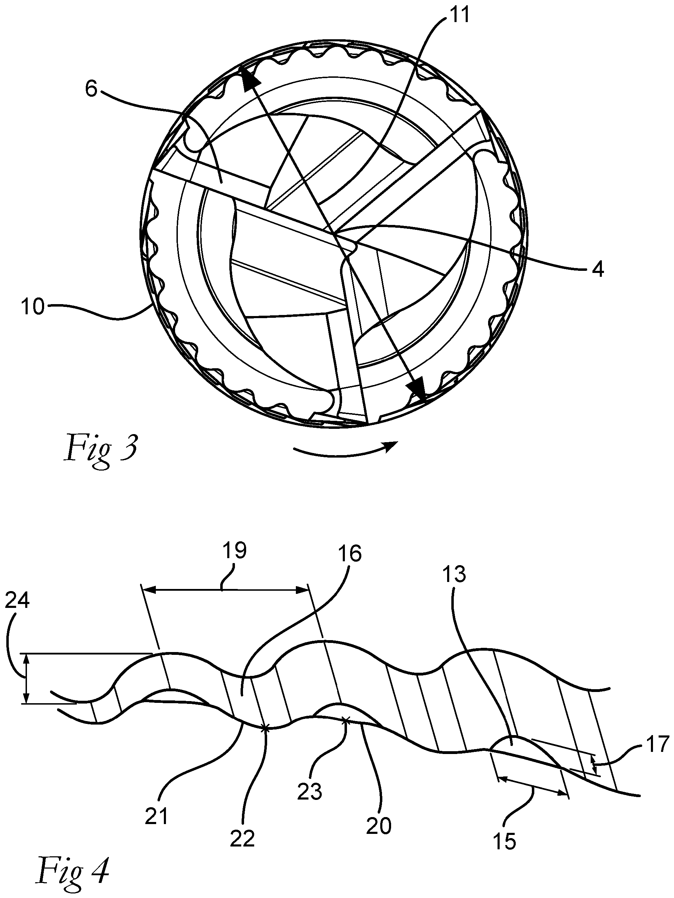

With reference to Figs. 1 - 7, an embodiment of the milling tool is shown. The milling tool comprises a body with a cutting head 1 and a shaft 2, which together form an integral unit. The milling tool of the shown embodiment is a solid round tool in form of a roughing end mill tool. The milling tool is connectable to a spindle of a CNC machine by means of the shaft 2. The milling tool comprises a wear resistant material of coated cemented carbide.

The cutting head 1 has a front end 3, which is also the front end of the milling tool, and a central longitudinal axis 4 extending rearward from the front end 3. The front end 3 of the cutting head 2 is an axially forwardly facing end surface of the milling tool.

The axis 4 is also the central longitudinal axis of the milling tool. The milling tool has a rear end 5 at the axially opposite end to the front end 3.

The cutting head 1 comprises a plurality of teeth 6, which each has a cutting edge 9 formed at an intersection of a respective rake surface 7, and a respective clearance surface 8. The milling tool according to the embodiment comprises three teeth 6. Each tooth 6 has a first portion that protrudes radially from a peripheral surface of the body of the cutting head and extends axially rearward from the front end. The first portion presents a cutting edge 9, which during operation cuts mainly in the radial direction. In addition, each tooth 6 has a second portion that protrudes axially from the front end surface and extends radially outward from a central region. The second portion presents a cutting edge 9, which during operation cuts mainly in an axial direction. The two portions meet at a forward, radially outer region.

The cutting head 1 comprises a plurality of chip flutes 12, namely three chip flutes 12, which are recessed in the peripheral surface and extend axially rearward from the front end 3. Each chip flute 12 extends rotationally in front of a respective one of the plurality of teeth 6 and a portion closest to the cutting edge 9 forms the rake surface 7. Each chip flute 12 forms a helix with a helix angle γ to the longitudinal axis 4. The helix angle γ of each tooth 6 is constant, and the same for each tooth 6. In the shown example embodiment, the helix angle γ is 37,5°.

The cutting head 2 defines a cutting circle 10 formed by the radially most outer points of the cutting edges 9 when the milling tool is rotated one turn around the longitudinal axis 4 without being fed in any direction. The cutting circle 10 has a cutting diameter 11, which in the shown embodiment is 12 mm. The direction of rotation is the direction that the milling tool is rotated during normal cutting operation and is indicated by an arrow in Figs. 1 - 3. The cutting head 1 is cylindrical and has an elongated extension along the longitudinal axis 4 which is approximately two times the cutting diameter of the cutting circle 10.

Each cutting edge 9 is continuous, and wave-shaped, wherein the cutting edge 9 comprises alternating radially outer crest cutting edges 20 and radially inner trough cutting edges 21. The crest cutting edges 20 and trough cutting edges 21 form waves having a wave height 24 in a radial direction, and a wavelength in an axial direction. Corresponding points on the wave-shaped cutting edge preferably follow a curve having the same helix angle γ to the longitudinal axis as the chip flute 12, which is rotationally in front thereof.

In an axial direction, a distance from the bottom point 22 on a trough cutting edge 21 to a bottom point 22 on a consecutive trough cutting edge 21 is a wavelength 19. In a radial direction, a distance from a bottom point 22 of a trough cutting edge 21 to a top point 23 of a consecutive crest cutting edge 20 is a wave height 24. The wavelength 19 may be measured in parallel with the longitudinal axis 4, and the wave height 24 along a radius. In the example embodiment, the wave-shape is sinusoidal with a constant wavelength 19 and wave height 24 long the cutting edge 9. In the present example embodiment, the wavelength 19 is 14% of the cutting diameter, which corresponds to 1 ,7mm, and the wave height 24 is 2,9% of the cutting diameter, which in the present example embodiment corresponds to 0,35mm.

During normal operation, the cutting edge 9 cuts uninterrupted over the entire axial length thereof, including the trough cutting edges 21 with the deepest bottom point 22. The cutting edge 9 thus is continuous and lacks chip breaking interruptions. The crest cutting edges 20 are linear, and the trough cutting edges 21 are concavely curved together forming a capped sinusoidal cutting edge 9. Each cutting edge 9 has the same wave-shape, but phase-shifted, wherein the phase-shift is a distance equal to the wavelength 19 divided by three.

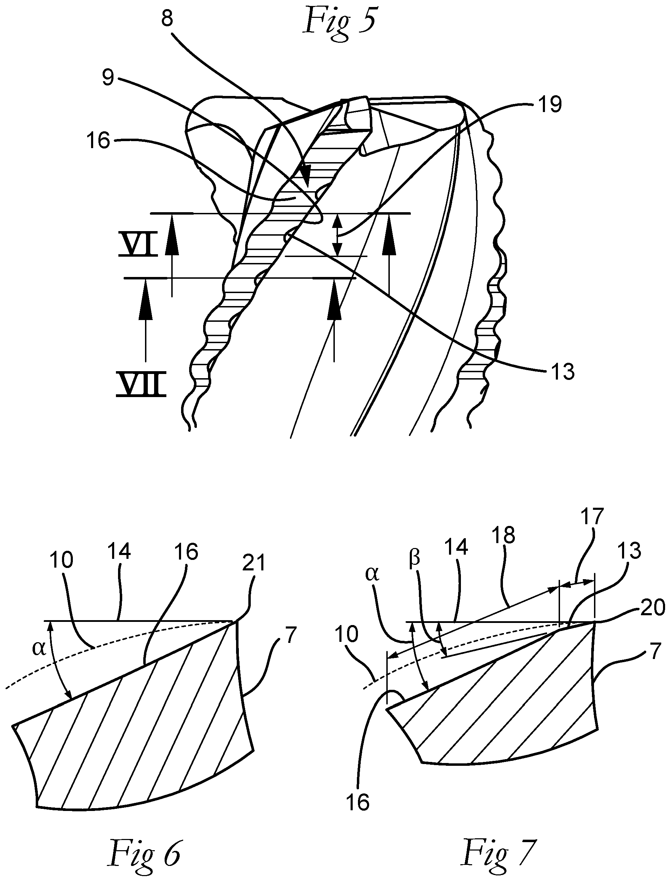

In each position along the cutting edge 9, the clearance surface 8 has a radial clearance angle. The radial clearance angle of a point of the cutting edge 9 may be measured in an axial cross section at the point, i.e. in a cross section with longitudinal axis 4 as normal, c.f. Figs. 6, 7. In this view, the radial clearance angle is the angle between a tangent 14 to a circle cut by the point when the milling tool is rotated without feed, and the clearance surface 8. As seen in the cross section, the clearance surface 8 has breadth in the rotational direction. The breadth can be measured as a distance from a rotationally leading end to a trailing end.

The clearance surface 8 of each tooth 6 comprises a primary clearance surface 16 and a plurality of stabilizing clearance surfaces 13, wherein each of the plurality of stabilizing clearances surfaces 13 is machined in the primary clearance surface 16. Along the cutting edge 9, the primary clearance surface 16 is a continuous surface extending rotationally further rearward than each of the plurality of stabilizing clearance surfaces 13.

Each of the plurality of stabilizing clearances surfaces 13 is located rotationally directly behind a respective one of the crest cutting edge 20 and follows the curvature of the respective one of the crest cutting edges 20 such that sharp corners at axially forward and axially rearward ends are avoided.

The radial stabilizing clearance angle β is 1°. A maximal breadth 17 of each of the stabilizing clearance surfaces is 100 µm. Each stabilizing clearance surface 13 extends along the wave-shaped cutting edge 9 for about 40% of the wavelength 19. In the example embodiment, an axial length 15 of the stabilizing clearance surface 13 is 0,7mm. The length 15 of each of the stabilizing clearance surfaces 13 is distributed symmetrically over the crest cutting edge 20.

The primary clearance surface 16 is located rotationally directly behind each of the trough cutting edges 21 and the stabilizing clearance surfaces 13. The primary clearance surface 16 has a radial primary clearance angle α which is larger than the radial stabilizing clearance angle β and in the example embodiment 11°.

The clearance surface 8 comprises a secondary clearance surface rotationally directly behind the primary clearance surface 16, which is in form of a step surface 25. The step surface 25 provides chip evacuations from chips cut by the front cutting edges at the second portion of the teeth 6.

## Claims

1. A milling tool for metal cutting comprising a body with a cutting head, which cutting head (1)
- has a front end (3) and a central longitudinal axis (4) extending rearward from the front end (3), and
- is rotatable around the longitudinal axis (4) in a direction of rotation, wherein
the cutting head (1) comprises a plurality of radially protruding and axially extending teeth (6), wherein each tooth (6) of the plurality teeth comprises
- a rake surface (7),
- a clearance surface (8), and
- a cutting edge (9),
- which, at an intersection of the rake surface (7) with the clearance surface (8), extends axially rearward from a radially outer region at the front end (3), and
- which is continuous, and wave-shaped, wherein the cutting edge (9) comprises alternating radially outer crest cutting edges (20) and radially inner trough cutting edges (21),
**characterize in that**
the clearance surface comprises a primary clearance surface (16), and
a plurality of stabilizing clearance surfaces (13), wherein
- each of the plurality of stabilizing clearances surfaces is located rotationally directly behind a respective one of the crest cutting edge (20), and has a radial stabilizing clearance angle β of 0,5° - 2°, and
- the primary clearance surface (16) is located rotationally directly behind each of the trough cutting edges (21) and has a radial primary clearance angle α which is larger than the radial stabilizing clearance angle β.

2. The milling tool according to claim 1, wherein the radial stabilizing clearance angle β is 0,75° - 1,25°.

3. The milling tool according to any preceding claim, wherein, as seen in a cross section, each of the stabilizing clearance surfaces (13) has a breadth, wherein the breadth of each of the plurality of stabilizing clearance surfaces (13) is at most 150 µm.

4. The milling tool according to any preceding claim, wherein, as seen in a cross section, each of the stabilizing clearance surfaces (13) has a breadth, wherein the breadth of each of the plurality of stabilizing clearance surfaces (13) is at least 50 µm.

5. The milling tool according to any preceding claim, wherein the radial primary clearance angle α is 8° - 12°.

6. The milling tool according to any preceding claim, wherein each of the plurality of stabilizing clearances surfaces is machined in the primary clearance surface (16).

7. The milling tool according to claim 6, wherein the primary clearance surface (16) extends rotationally further rearward than each of the plurality of stabilizing clearance surfaces (13).

8. The milling tool according to any preceding claim, wherein,
- the cutting head (1) has a cutting diameter,
- in an axial direction, a distance from a point on a crest cutting edge (21) to a corresponding point on a consecutive crest cutting edge (21) is a wavelength (19),
- an average of all wavelengths is 10 - 15 % of the cutting diameter.

9. The milling tool according to claim 8, wherein a length in the axial direction of the stabilizing clearance surface (13) of the crest cutting edge (20), that is located between the two consecutive trough cutting edges (21), is at least 10% of the wavelength (19).

10. The milling tool according to claim 9, wherein the length of the stabilizing clearance surface (13) is at most 50% of the wavelength (19).

11. The milling tool according to any claim 8 - 10, wherein,
- in a radial direction, a distance from a bottom point of a crest cutting edge (21) to a top point (23) of a consecutive crest cutting edge (20) is a wave height (24),
- an average of all wave heights (24) is 2 - 5 % of the cutting diameter.

12. The milling tool according to claim 11, wherein the wavelength (19) and/or the wave height (24) is constant along the cutting edge (9).

13. The milling tool according to claim 12, wherein a wave formed by the constant wavelength (19) and wave height (24) is phase-shifted between the cutting edges (9) of the plurality of teeth (6) by a distance equal to the wavelength (19) divided by the number of the plurality of teeth (6).

14. The milling tool according to any preceding claim, wherein the crest cutting edges (20) are convexly curved and each of the plurality of stabilizing clearances surfaces follows the curvature of the respective one of the crest cutting edges (20).

15. The milling tool according to any preceding claim, wherein the waveshape of the cutting edge is sinusoidal.
